# DEMANDE DE BREVET EUROPEEN

(11) **EP 4 737 218 A1**
(43) Date de publication de la demande: **06.05.2026**
(21) Numéro de dépôt: 25210345.2
(22) Date de dépôt: 22.10.2025
(51) Int. Cl.: B60R 5/04

(54) **STRUCTURE ARRIÈRE DE VÉHICULE AUTOMOBILE**

(30) Priorité: 30.10.2024 FR 2411854
(71) Demandeur: Renault s.a.s, 92100 Boulogne Billancourt (FR)
(72) Inventeur: ANDREI, Valentin, 062203 Bucarest (RO); MAYMARD, Nicolas, 78280 Guyancourt (FR)

(57) **Abrégé**

L'invention concerne une structure arrière de véhicule automobile comprenant : un coffre (12) délimité par deux parois latérales (14, 16) et une paroi de plancher (18) ; une paroi de toit (20) en surplomb de ladite paroi de plancher (18) et rejoignant lesdites parois latérale (14, 16) en délimitant une ouverture (26) ; un hayon (24) monté articulé sur ladite paroi de toit (20) pour venir obturer ladite ouverture (26) ; une tablette cache-bagages (36) adaptée à venir s'étendre au-dessus dudit coffre (12), ladite tablette cache-bagages présentant un bord postérieur (44) et deux bords latéraux opposés, ledit bord postérieur (44) étant articulé sur ledit hayon (24), tandis que lesdits deux bords latéraux sont reliés respectivement auxdites parois latérales (14, 16). La structure comprend deux glissières (38, 40) montées respectivement sur lesdites deux parois latérales, tandis que ladite tablette cache-bagages (36) comporte deux tourillons (50, 52) venant respectivement à coulissement dans lesdites glissières (38, 40) et deux liens flexibles (70, 72) reliant la tablette cache-bagages (36) auxdites deux parois latérales (14, 16).

## Description

La présente invention se rapporte à une structure arrière de véhicule automobile et en particulier à une tablette cache-bagages.

Les structures arrière de véhicule automobile connues comprennent usuellement un coffre délimité par deux parois latérales ou custodes, dressées en regard l'une de l'autre sur la paroi de plancher du véhicule.

Le plancher du véhicule, correspondant au porte-à-faux arrière, constitue la paroi de fond du coffre. Les véhicules comportent une paroi de toit qui vient s'étendre en surplomb de la paroi de plancher et qui rejoint de chaque côté les parois latérales en définissent une ouverture. L'ouverture est alors adaptée à être refermée par un hayon qui est monté articulé transversalement sur la paroi de toit.

En outre, le coffre est également délimité vers l'avant, par la rangée de sièges arrière du véhicule, et en particulier par le dossier des sièges arrière.

Aussi, le véhicule comporte une tablette cache-bagages qui vient s'étendre horizontalement au-dessus du coffre, selon une direction transversale d'une paroi latérale à l'autre et selon une direction longitudinale, du sommet des dossiers des sièges arrière jusqu'au hayon lorsque ce dernier est abaissé et obture l'ouverture.

La tablette cache-bagages est généralement mobile pour pouvoir accéder librement au coffre lorsque le hayon est relevé.

Ainsi, il a été imaginé de monter le bord antérieur du cache-bagages articulé le long du sommet des dossiers et de relier ses bords latéraux au hayon par l'intermédiaire de cordelettes. De la sorte, lorsque le hayon est relevé, le cache-bagages se relève également pour libérer à tout le moins partiellement l'ouverture du coffre.

Pour accéder encore plus librement au coffre, il a été imaginé de monter le bord postérieur du cache-bagages articulé sur la face intérieure du hayon et de relier ses bords latéraux au niveau du bord antérieur, aux deux parois latérales respectivement au moyen de cordelettes également.

De la sorte, lorsque le hayon est relevé, le cache-bagages s'escamote et vient s'appliquer contre la face interne du hayon, en libérant l'ouverture. En revanche, à l'inverse, lorsque le hayon est rabaissé pour obturer l'ouverture du coffre, le bord antérieur du cache-bagages est entraîné selon un mouvement pendulaire et vient balayer le sommet de l'espace réservé au coffre au risque de percuter les bagages entreposés sur le plancher.

Aussi, un problème qui se pose et que vise à résoudre la présente invention est non seulement de fournir un cache-bagages escamotable qui libère l'ouverture du coffre lorsque le hayon est relevé, mais aussi qui n'interfère pas avec le contenu du coffre lorsque le hayon est rabaissé.

Dans le but de résoudre ce problème, il est proposé une structure arrière de véhicule automobile comprenant : un coffre délimité par deux parois latérales dressées en regard l'une de l'autre sur une paroi de plancher ; une paroi de toit s'étendant en surplomb de ladite paroi de plancher et rejoignant lesdites parois latérale en délimitant une ouverture ; un hayon monté articulé transversalement sur ladite paroi de toit pour venir obturer ladite ouverture lorsque ledit hayon est abaissé et pour venir dégager ladite ouverture lorsque ledit hayon est relevé ; et, une tablette cache-bagages adaptée à venir s'étendre au-dessus dudit coffre, ladite tablette cache-bagages présentant un bord postérieur opposé à un bord antérieur et deux bords latéraux opposés, ledit bord postérieur étant articulé sur ledit hayon, tandis que lesdits deux bords latéraux sont reliés respectivement auxdites parois latérales pour pouvoir guider ladite tablette cache-bagages en mouvement contre ledit hayon lorsque ledit hayon est relevé pour libérer ladite ouverture.

La structure arrière comprend deux glissières montées respectivement sur lesdites deux parois latérales, tandis que ladite tablette cache-bagages comporte deux tourillons s'étendant respectivement en saillie desdits deux bords latéraux pour venir respectivement à coulissement dans lesdites glissières, et, deux liens flexibles reliant ladite tablette cache-bagages auxdites deux parois latérales respectivement, pour retenir lesdits tourillons au voisinage desdites glissières lorsque ledit hayon est relevé. Les deux liens flexibles guident lesdits tourillons vers lesdites glissières lorsque ledit hayon est abaissé.

Ainsi, une caractéristique de l'invention réside dans la mise en œuvre de glissières dans les deux parois latérales opposées de manière à pouvoir guider en translation la tablette cache-bagages, notamment lorsque le hayon est porté, d'une position relevée dans laquelle il libère l'ouverture, vers une position abaissée pour obturer l'ouverture.

Une autre caractéristique de l'invention réside dans la mise en œuvre de liens flexibles qui permet de retenir la tablette cache-bagages lorsque le hayon est porté dans la position relevée. Les liens flexibles permettent, en outre, de guider les tourillons dans les glissières lorsque le hayon est abaissé.

Ainsi, le bord antérieur de la tablette cache-bagages et les tourillons sont alors guidés, non plus selon un mouvement pendulaire, qui vient balayer le sommet de l'espace réservé au coffre, mais selon un mouvement de translation sensiblement rectiligne au-dessus de l'espace réservé au coffre.

Conséquemment, le coffre peut être chargé jusqu'à son volume maximal sans venir perturber le mouvement du cache-bagages lorsque le hayon est relevé ou abaissé.

Cette structure permet également une ouverture plus grande sur le coffre puisque la tablette cache-bagages lorsque le hayon est relevé. Ainsi même pour un coffre présentant une longueur supérieure à 1 mètre, il est possible pour l'utilisateur d'avoir une vision de l'entièreté du coffre.

L'utilisation de liens flexibles en combinaison avec les glissières permet, en outre, de limiter les problèmes de vibrations acoustiques qui peuvent endommager les liens flexibles ainsi la présence de la glissière permet de maintenir la tablette cache-bagages.

Selon un mode de mise en œuvre de l'invention particulièrement avantageux, lesdits deux tourillons s'étendent coaxialement dans une position rapprochée dudit bord antérieur. De la sorte, le cache-bagages pivote selon un axe parallèle et voisin de son bord antérieur à mesure qu'il est entraîné en translation jusqu'à sa position terminale où il s'étend sensiblement horizontalement au-dessus du coffre. En conséquence, les glissières peuvent être installées au niveau du sommet de l'espace réservé au coffre, comme on l'expliquera plus en détail dans la suite de la description.

Avantageusement, lesdites glissières s'étendent à distance de ladite paroi de plancher.

Aussi, la structure arrière selon l'invention comprend en outre une cloison transversale dressée sur ladite paroi de plancher et s'étendant d'une paroi latérale à l'autre en délimitant ledit coffre. Préférentiellement, la cloison transversale est formée par les dossiers des sièges arrière du véhicule automobile.

Selon un mode de réalisation de l'invention particulièrement avantageux, lesdites glissières s'étendent jusqu'à ladite cloison transversale. De la sorte, le cache-bagages est guidé en pivotement et en translation jusqu'à la cloison transversale, lorsque le hayon est abaissé, de manière à recouvrir entièrement le coffre.

Préférentiellement, lesdites glissières sont formées en cornières et présentent une bande d'appui et une paroi de guidage perpendiculaire à ladite bande d'appui de sorte que les tourillons viennent en appui sur la glissière.

Préférentiellement, ladite paroi de guidage se prolongent vers la cloison transversale en se courbant en opposition à ladite bande d'appui de sorte que lesdites glissières forment un profil en U. Ainsi, la section transversale de la glissière est modifiée lorsqu'elle s'étend vers la cloison transversale. Elle présente donc une section en L puis elle s'étend progressivement pour former une section en U.

En outre, lesdites deux parois latérales présentent chacune une garniture, et avantageusement, les garnitures desdites parois latérales présentent respectivement deux rainures formant lesdites glissières. Ainsi, il n'est nul besoin de prévoir des points d'ancrage des glissières dans la carrosserie du véhicule automobile. Ces glissières sont alors réalisées à moindre coût.

Selon une variante de réalisation particulièrement avantageuse, lesdites garnitures sont réalisées dans un matériau thermoplastique, et lesdites deux rainures sont respectivement moulées dans lesdites garnitures. Partant, on réduit plus encore le coût de réalisation des glissières.

Avantageusement, lesdits tourillons sont dans un matériau polymère. La tablette cache-bagages peut être réalisée dans un matériau composite par exemple, et elle peut être thermoformée sur les tourillons insérés.

Conséquemment, les deux tourillons ne forment avec la tablette qu'une seule pièce et de surcroît, on équipe la tablette cache-bagages avec les deux tourillons à un coût avantageux.

Le matériau polymère dans lequel sont moulés les tourillons doit être un matériau résistant au frottement, et compatible avec celui des glissières. En effet, les tourillons sont entraînés essentiellement en frottement à l'intérieur des glissières.

Selon une variante de réalisation, les tourillons sont respectivement montés à rotation dans des coussinets, lesquels coussinets sont adaptés à coulisser librement à l'intérieur des rainures.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique en perspective arrière gauche d'un coffre ouvert de véhicule automobile ;
[Fig. 2] est une vue schématique en coupe médiane d'un coffre ouvert de véhicule automobile selon l'invention et dans un premier état ;
[Fig. 3] est une vue schématique de l'objet de la [Fig. 2] dans état intermédiaire ;
[Fig. 4] est une vue schématique de l'objet de la [Fig. 2] dans un autre état ;
[Fig. 5] est une vue schématique partielle de détail en coupe droite de l'objet de la [Fig. 2] ; et,
[Fig. 6] est une vue schématique de dessus d'un autre détail de l'objet de la [Fig. 2].

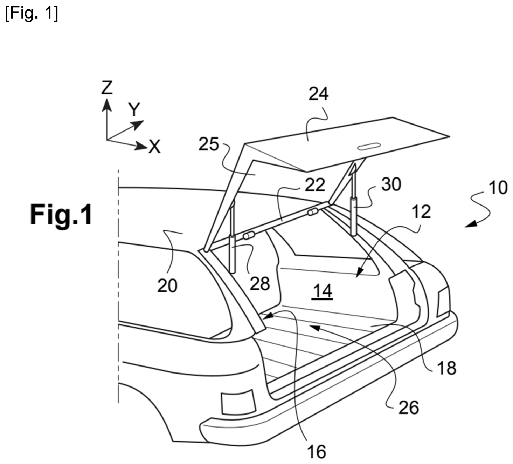

La [Fig. 1] montre partiellement un véhicule automobile et plus précisément sa structure arrière 10 vue de trois quarts gauche, laquelle est démunie de l'objet de l'invention.

Elle s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

Aussi, la structure arrière 10 présente un coffre 12, lequel est délimité selon la direction transversale Y, par deux parois latérales en regard l'une de l'autre, une paroi droite 14 et une paroi gauche 16. Le coffre 12 présente également une paroi de fond 18 correspondant au prolongement du plancher arrière du véhicule automobile.

Aussi, la structure arrière 10 comporte un toit 20 venant s'étendre en surplomb de la paroi de fond 18 du coffre 12. Le toit 20 présente une bordure 22 sur laquelle est monté articulé un hayon 24. Ce dernier présente une paroi vitrée 25 autorisant le passage de la lumière visible.

Ainsi, le fond 18, les deux parois latérales 14, 16 dressées et la bordure 22 du toit 20 délimite une ouverture 26 que le hayon 24 est apte à venir refermer.

Tel que représenté sur la [Fig. 1], le hayon 24 est relevé et il est maintenu dans cette position grâce à deux ressorts à gaz 28, 30, de manière à pouvoir donner accès au coffre 12.

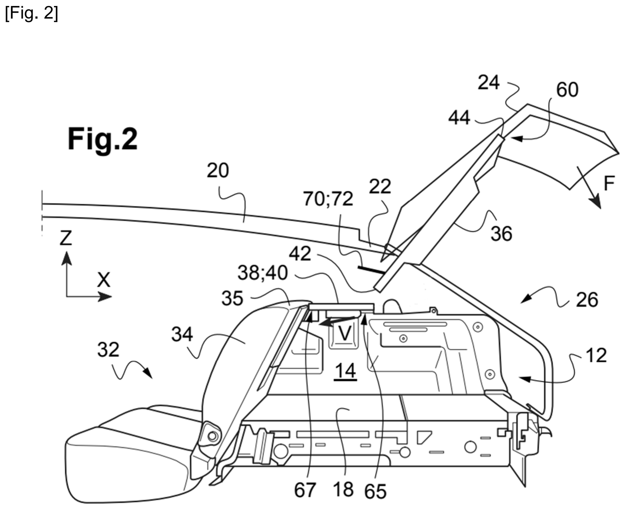

La [Fig. 2] illustre l'objet de la [Fig. 1] selon une coupe médiane parallèle au plan (X, Z). On y retrouve le coffre 12 et son ouverture 26.

On retrouve également le plancher 18, bordé par la paroi droite 14. En outre, le coffre 12 est délimité vers l'avant par la rangée de sièges arrière 32 et plus particulièrement par les dossiers 34 des sièges arrière 32. Les dossiers 34 présentent un sommet 35, par-dessus lequel le conducteur du véhicule automobile peut avoir une vision arrière via le rétroviseur intérieur.

Au surplus, apparaissent également le toit 20 et sa bordure 22 le long de laquelle est articulé le hayon 24.

En outre, et conformément à l'invention, la structure arrière 10 comprend une tablette cache-bagages 36 solidaire du hayon 24 et deux glissières opposées, une glissière droite 38, et une glissière gauche 40 adaptées à coopérer avec la tablette cache-bagages 36 comme on va l'expliquer ci-après. La structure arrière 10 comprend, aussi, deux liens flexibles opposées, un lien flexible droit 70 et un lien flexible gauche 72, reliant respectivement la paroi droite 14 et gauche 16 à la tablette cache-bagages 36 pour la retenir comme on va également l'expliquer ci-après.

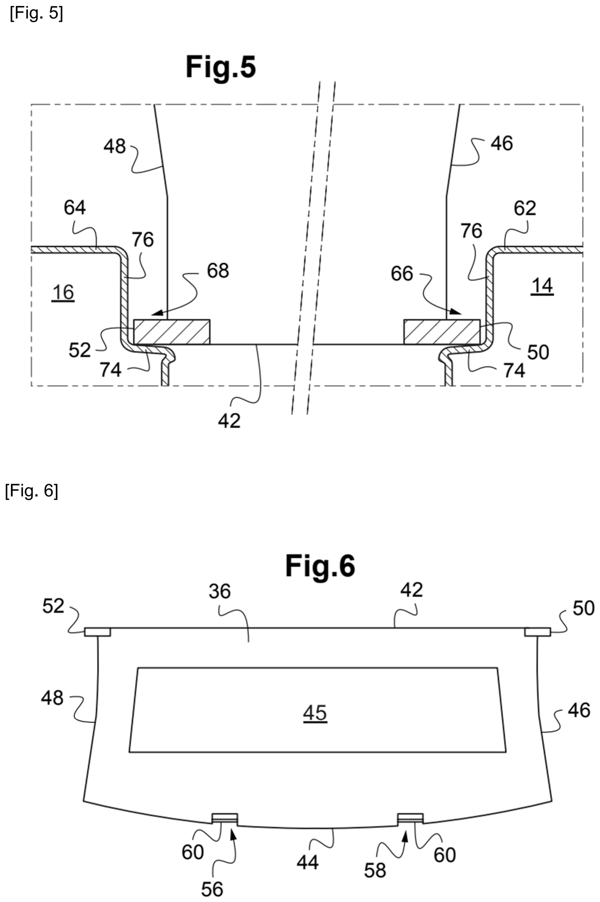

On détaillera tout d'abord la tablette cache-bagages 36 en regard de la [Fig. 6]. Ainsi, la tablette cache-bagages 36 est thermoformée d'une seule pièce en matériau composite. Elle présente un bord transversal antérieur 42 opposé à bord transversal postérieur 44. En outre, elle présente deux bords latéraux opposés, un bord latéral droit 46 et un bord latéral gauche 48.

Aussi, elle présente un enfoncement central 45 permettant de former des nervures de renforcement mécanique.

Au surplus, la tablette cache-bagages 36 comprend deux tourillons opposés 50, 52 venant s'étendre coaxialement en saillie respectivement du bord latéral droit 46 et du bord latéral gauche 48 près du bord transversal antérieur 42.

Les tourillons 50, 52 sont réalisés dans un matériau polymère. Ils sont par exemple moulés en polyamide, ou en polyéthylène.

Selon un mode de mise en œuvre préférentielle, les tourillons 52, 50 sont insérés dans le moule de thermoformage de la tablette de manière à ne former qu'une seule pièce après le moulage.

La tablette cache-bagages 36 présente en outre deux encoches 56, 58 ménagées dans le bord postérieur 44 et écartées l'une de l'autre. Aussi, deux tiges 60 s'étendent respectivement en travers des deux encoches 56, 58 tandis que leurs deux extrémités opposées sont noyées dans l'épaisseur de la tablette.

De la sorte, la tablette cache-bagages 36 peut être montée articulée à l'intérieur du hayon 24 comme illustré sur la [Fig. 2]. Pour ce faire, les deux tiges 60 sont respectivement engagées dans deux crochets écartés l'un de l'autre et solidaires de la paroi interne du hayon 24. Les crochets, non représentés, présentent un loquet de verrouillage pour pouvoir emprisonner les tiges 60, et les libérer si besoin pour désolidariser la tablette cache-bagages 36 du hayon 24.

A l'opposé, le bord antérieur 42 de la tablette cache-bagages 36 est maintenu et guidé grâce aux deux tourillons 50, 52, lesquels coopèrent avec les glissières 38, 40, comme on va l'expliquer ci-après.

Ainsi, les deux parois latérales en regard 14, 16 sont recouvertes de deux garnitures 62, 64 formant les glissières 38, 40. Ces deux garnitures 62, 64 s'étendent longitudinalement de l'ouverture 26 jusqu'aux dossiers des sièges arrière 32.

On les retrouve plus en détail sur la [Fig. 5], vues en coupe droite transversale. Les garnitures sont moulées chacune d'une seule pièce dans un matériau polymère. Et les garnitures 62, 64 sont moulées avec des rainures en regard 66, 68.

Ces rainures 66, 68 sont formées en cornières avec un profil en L et elles présentent chacune une bande d'appui 74 d'une largeur supérieure au diamètre des tourillons 50, 52. Chaque rainure 66, 68 présente, en outre, une paroi de guidage 76 perpendiculaire à la bande d'appui 74. La paroi de guidage 76 se prolonge en se courbant de sorte que la section des rainures 66, 68 forment progressivement un U.

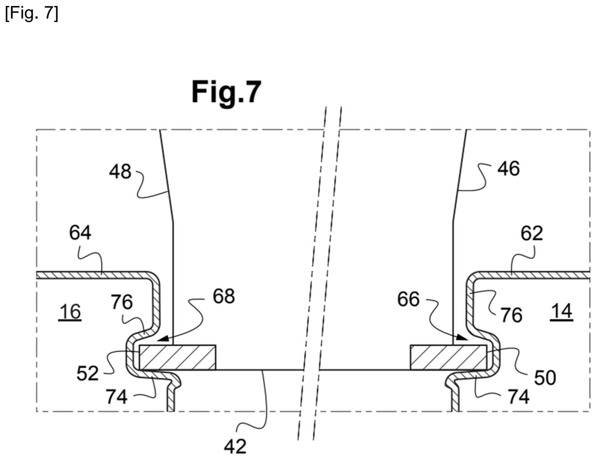

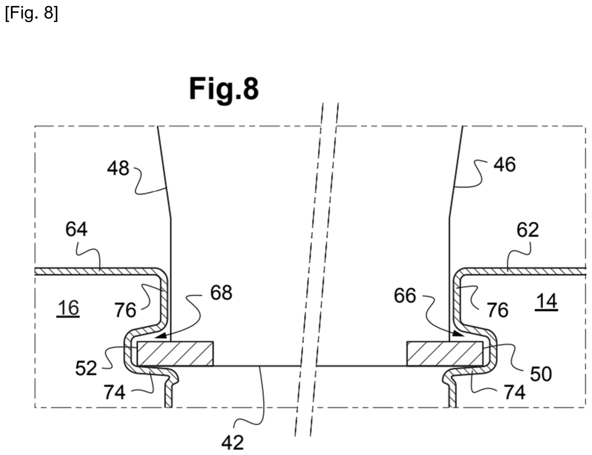

Ainsi, en référence à la [Fig. 5], la section des rainures 66, 68 est en forme de L, puis progressivement la section est en forme de J telle que représentée sur la [Fig. 7] et finalement, la section proche du dossier des sièges est en forme de U telle que représentée sur la [Fig. 8].

En outre, les rainures 66, 68 sont orientées selon une composante longitudinale X, et elles sont sensiblement parallèle à cette composante.

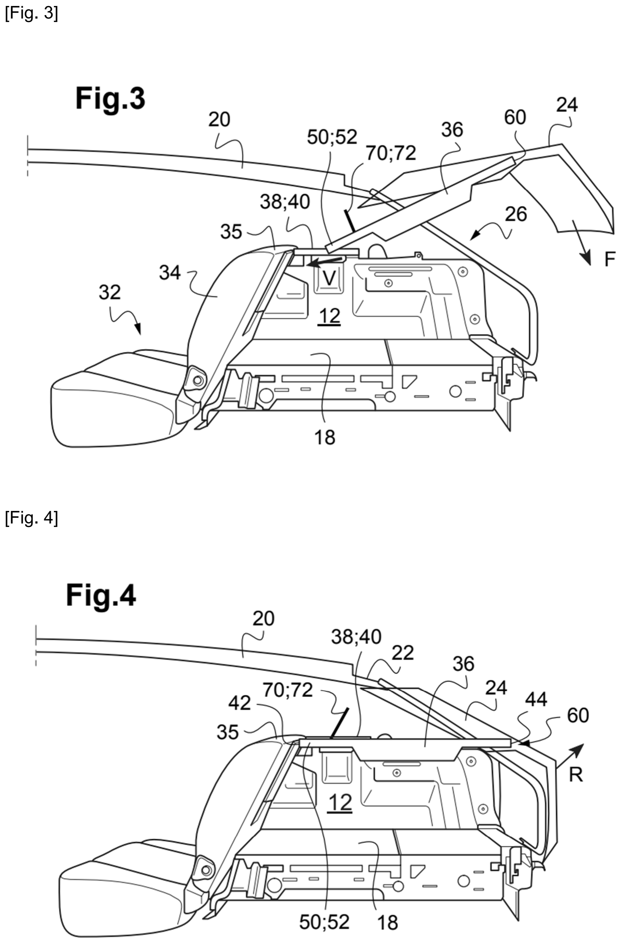

Ainsi, les rainures 66, 68 accueillent respectivement les tourillons 50, 52 à l'intérieur desquelles ils sont aptes à coulisser mais aussi à tourner sur eux-mêmes, comme on va l'expliquer en référence aux [Fig. 2], [Fig. 3] et [Fig. 4].

Les deux liens flexibles 70, 74 sont représentés sur les [Fig. 2], [Fig. 3] et [Fig. 4].

Le lien flexible droit 70 est relié à la paroi droite 14 tandis que le lien flexible gauche 72 est relié à la paroi gauche 16. Ils sont reliés par une de leurs extrémités à la paroi 14, 16 par un pion, non représentés, autour duquel est enroulé le lien flexible et qui permet de le retenir.

L'autre extrémité des liens flexibles 70, 74, est reliée à la tablette cache-bagages. Elles sont notamment cousues à la tablette et elles sont écartées l'une de l'autre et solidaires de la tablette cache-bagages 36. Les liens flexibles 70, 74 peuvent être par exemple un cordon ou une ficelle.

On observera sur la [Fig. 2] que la tablette cache-bagages 36, suspendue au hayon 24 est inclinée d'un angle inférieur à 180° par rapport aux glissières 38, 40, par exemple 120°.

Dans cette position du hayon 24, les tourillons 50, 52 de la tablette cache-bagages 36 ne sont pas en appui dans les glissières 38, 40 et les liens flexibles retiennent les tourillons 50, 52 au voisinage des glissières 38, 40. La tablette cache-bagages 36 est également retenue pour que le bord antérieur 42 ne se déplace pas à l'intérieur du coffre et obture l'ouverture 26.

A partir de cette position du hayon 24 et de la tablette cache-bagages 36, dans laquelle l'ouverture 26 est totalement libre et dans laquelle on accède librement au coffre 12, le hayon 24 va être abaissé dans le but d'obturer l'ouverture 26.

Ainsi, comme l'illustre la [Fig. 3], lorsque le hayon est entrainé en pivotement selon la flèche F, la tablette cache-bagages 36 est elle-même entraînée en translation et en pivotement.

En effet, les tourillons 50, 52 sont, tout d'abord, entraînés en pivotement vers les glissières 38, 40. Les liens flexibles retiennent, en outre, la tablette cache-bagages de sorte à guider les tourillons 50, 52 vers et dans les glissières 38, 40.

Les tourillons 50, 52 sont, ensuite, entraînés à la fois en translation dans les glissières 38, 40 vers le sommet 35 des dossiers 34 selon la flèche V, et simultanément en rotation. Parallèlement, le bord postérieur 44 de la tablette cache-bagages 36 pivote par rapport au hayon 24.

De plus les deux bords latéraux opposés 46, 48 de la tablette cache-bagages 36 viennent respectivement en appui glissant contre les deux parois latérales opposées 14, 16.

En poursuivant l'entraînement du hayon 24, jusqu'à son verrouillage pour obturer totalement l'ouverture 26, comme illustré sur la [Fig. 4], les tourillons 50, 52 poursuivent leur course dans les glissières 38, 40 jusqu'à l'extrémité avant 67 de ces dernières. Dans la position abaissée du hayon 24, les tourillons sont alors bloqués 50, 52 par les glissières 38, 40 du fait de leur forme en U.

Le bord antérieur 42 de la tablette cache-bagages 36 vient alors s'appliquer contre les dossiers 34 des sièges 32, au voisinage de leur sommet 35.La tablette cache-bagages 36 s'étend alors sensiblement parallèlement à la paroi de fond 18 du coffre 12. Ces deux bords latéraux 46, 48 sont en appui sur les deux garnitures 62, 64 respectivement, tandis que le bord postérieur 44 est lui en appui contre l'intérieur du hayon 24.

De la sorte, le contenu du coffre 12 est entièrement masqué par la tablette cache-bagages 36.

À l'inverse, lorsque le hayon 24 et relevé, selon la flèche R, il entraîne avec lui la tablette cache-bagages 36, grâce à ses deux tiges 60 en prise dans les crochets du hayon. Et concomitamment, les tourillons 50, 52 sont entraînés en rotation et en translation dans les glissières 38, 40.

La tablette cache-bagages 36 est alors entraînée en translation et en pivotement jusqu'à venir s'appliquer contre la paroi interne du hayon 24, lorsque ce dernier atteint sa position ultime telle que représentée sur la [Fig. 2].

L'ouverture 26 est alors totalement libérée pour pouvoir accéder à l'intérieur du coffre 12.

## Revendications

1. Structure arrière de véhicule automobile comprenant :
- un coffre (12) délimité par deux parois latérales (14, 16) dressées en regard l'une de l'autre sur une paroi de plancher (18) ;
- une paroi de toit (20) s'étendant en surplomb de ladite paroi de plancher (18) et rejoignant lesdites parois latérale (14, 16) en délimitant une ouverture (26) ;
- un hayon (24) monté articulé transversalement sur ladite paroi de toit (20) pour venir obturer ladite ouverture (26) lorsque ledit hayon est abaissé et pour venir dégager ladite ouverture (26) lorsque ledit hayon est relevé ;
- une tablette cache-bagages (36) adaptée à venir s'étendre au-dessus dudit coffre (12), ladite tablette cache-bagages présentant un bord postérieur (44) opposé à un bord antérieur (42) et deux bords latéraux opposés (46, 48), ledit bord postérieur (44) étant articulé sur ledit hayon (24), tandis que lesdits deux bords latéraux (46, 48) sont reliés respectivement auxdites parois latérales (14, 16) pour pouvoir guider ladite tablette cache-bagages (36) en mouvement contre ledit hayon (24) lorsque ledit hayon est relevé pour libérer ladite ouverture (26) ; **caractérisée en ce qu'**elle comprend :
- deux glissières (38, 40) montées respectivement sur lesdites deux parois latérales (14, 16), tandis que ladite tablette cache-bagages (36) comporte deux tourillons (50, 52) s'étendant respectivement en saillie desdits deux bords latéraux (46, 48) pour venir respectivement à coulissement dans lesdites glissières (38, 40),
- deux liens flexibles (70, 72) reliant ladite tablette cache-bagages (36) auxdites deux parois latérales (14, 16) respectivement, pour retenir lesdits tourillons (50, 52) au voisinage desdites glissières (38, 40) lorsque ledit hayon (24) est relevé, et,
**en ce que** lesdits deux liens flexibles (70, 72) guident lesdits tourillons (50, 52) vers lesdites glissières (38, 40) lorsque ledit hayon (24) est abaissé.

2. Structure arrière selon la revendication 1, **caractérisée en ce que** lesdits deux tourillons (50, 52) s'étendent coaxialement dans une position rapprochée dudit bord antérieur (42).

3. Structure arrière selon la revendication 1 ou 2, **caractérisée en ce que** lesdites glissières (38, 40) s'étendent à distance de ladite paroi de plancher (18).

4. Structure arrière selon l'une quelconque des revendications 1 à 3, **caractérisée en ce qu'**elle comprend en outre une cloison transversale (34) dressée sur ladite paroi de plancher (18) et s'étendant d'une paroi latérale (14, 16) à l'autre en délimitant ledit coffre (12).

5. Structure arrière selon la revendication 4, **caractérisée en ce que** lesdites glissières (38, 40) s'étendent jusqu'à ladite cloison transversale (34).

6. Structure arrière selon la revendication 5, **caractérisée en ce que** lesdites glissières (38, 40) sont formées en cornières et présentent une bande d'appui (74) et une paroi de guidage (76) perpendiculaire à ladite bande d'appui (74).

7. Structure arrière selon la revendication 6, **caractérisée en ce que** ladite paroi de guidage (76) se prolongent vers la cloison transversale (34) en se courbant en opposition à ladite bande d'appui (74) de sorte que lesdites glissières (38, 40) forment un profil en U.

8. Structure arrière selon l'une quelconque des revendications 1 à 7, caractérisée en ce lesdites deux parois latérales (14, 16) présentent chacune une garniture (62, 64), et en ce que les garnitures desdites parois latérales présentent respectivement deux rainures (66, 68) formant lesdites glissières (38, 40).

9. Structure arrière selon l'une quelconque des revendications 4 à 7, **caractérisée en ce que** lesdites garnitures (62, 64) sont réalisées dans un matériau thermoplastique, et **en ce que** lesdites deux rainures (66, 68) sont respectivement moulées dans lesdites garnitures.

10. Structure arrière selon l'une quelconque des revendications 1 à 8, **caractérisée en ce que** lesdits tourillons (50, 52) sont dans un matériau polymère.
